# EUROPEAN PATENT APPLICATION

(11) **EP 1 335 380 A1**
(43) Date of publication of application: **13.08.2003**
(21) Application number: 02388012.3
(22) Date of filing: 12.02.2002
(51) Int. Cl.: G11B 33/04

(54) **Compact disc storage box**

(71) Applicant: Huang, Pei-Lin, Taipei (TW)
(72) Inventor: Huang, Pei-Lin, Taipei (TW)
(74) Representative: Kristoffersen, Bo

(57) **Abstract**

The present invention relates to a compact disc storage box especially for storage of compact discs or the like mainly comprising of a hard plastic box and several plastic holders. The hard plastic box is designed alongside with side-walls for tight closing thus protecting the discs stored from light, pollution and dust for longer life span and easy management. Each of the holders has two lateral sides with eight pockets and is secured in the middle of the hard plastic box. Hence, the present invention provides a safer and easier way for storage and management and is simple and economical to manufacture.

## Description

### TECHNICAL RANGE

The present invention relates to a compact disc storage box especially for storage of compact discs and the like.

### INVENTION BACKGROUND

Commonly used compact discs holder and storage packs are generally weak in structure and can be easily damaged thus shortening life span of discs.

Apart from the weak structure of compact discs holder and storage packs mentioned above, such packs are not protected from environmental damages such as pollution, direct light and humidity.

In order to obviate the above drawbacks, storage packs have been improved to album-like CD packs and CD cabinets. However, these structure are not practical to use and require higher capital cost.

Further, bag-like CD holder packs found on the market are mainly convenient for travelers.

### SUMMARY OF INVENTION

Accordingly, it is an object of the present invention to provide a storage box for long-term preservation and maintaining of compact discs, such storage box being simple and economical to manufacture.

Another object of the present invention is to provide such storage box suitable for any occasions which includes means to prevent damage from wind, rain, sunlight or pressure.

A further object of the present invention is to provide packaging for a compact disc which includes means for maintaining the packaging in its closed orientation.

It is another object to provide such packaging which is very practical to use, simple and economical to manufacture.

### DESCRIPTION OF DRAWINGS

Fig.1 shows an outer appearance of the present invention.
Fig.2 shows a view of the present invention in half-open orientation.
Fig.3 shows a top plan view of the present invention in fully open orientation.

### NUMERICAL

10―storage box 20―hard-plastic box 30―plastic holders 21―side-walls 22―finger slot 23―blank unit 24―middle section 31―sheets 32―pockets 33―cotton-like material 34―thin film 35―edge 36―pocket cap 37―fold-line

### MODE FOR CARRYING OUT INVENTION

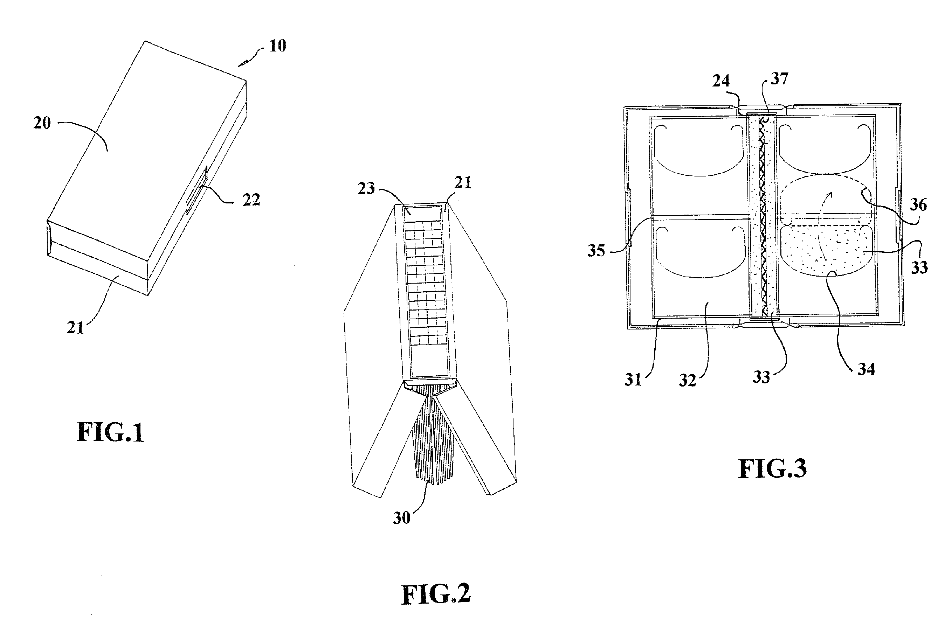

With reference to Fig. 1 showing an outer appearance of the present invention, the compact disc storage box 10 mainly consists of a hard-plastic box 20 and several plastic holders 30. The storage box 20 shown in the diagram is designed with side-walls 21 for tight closing thus protecting the discs from light, pollution, dust and pressure, hence prolonging their life span. Due to the three dimensional and rectangular structure of said storage box, the boxes can be piled up for better management and long preservation. A finger slot 22 is found at the right side of the side-walls 21 for opening storage box 20 and blank units 23 are found at the left side of the side-walls 21 for naming in order to facilitate classification (please refer to Fig.2). It is also possible to collect several discs of similar subjects in one storage box 20 and add a transparent film to the cover such that an index can be inserted in-between.

With reference to Fig.2 and Fig.3, the plastic holders 30 comprises of sheets 31 and pockets 32 and consists of two sides. Each sheet 31 is made of cotton-like material 33 and a thin film 34 is found at each side. Each pocket is designed with a cap 36 for removal or stocking 32 secured at the fold-line in the middle section 24 of the storage box.

## Claims

1. A compact disc storage box mainly consisting of a hard-plastic box and several plastic holders wherein:
said storage box is designed alongside with side-walls for tight closing thus protecting the discs from light, pollution, dust and pressure and can be piled up for better management.
Each pocket sheet has two sides and is designed with eight pockets. Each sheet is secured at the fold-line in the middle section of the storage box.

2. As mentioned in Claim 1 of "A compact disc storage box", a finger slot is found at the right side of the side-wall for opening of said storage box and blank units are found at the left side of the side-wall for naming in order to facilitate classification. It is also possible to collect several discs of similar subject in one storage box and add a transparent film to the cover such that an index can be inserted in-between.

3. As mentioned in Claim 1 of "A compact disc storage box", said plastic holders comprises of sheets and pockets and consists of two sides. Each sheet is made of cotton-like material and a thin film is found at each side. Each pocket is designed with a cap for removal or stocking of compact discs. Further, each sheet has eight pockets secured at the fold-line in the middle section of the storage box.
